# EUROPÄISCHE PATENTSCHRIFT

(11) **EP 1 018 296 B1**
(45) Veröffentlichungstag und Bekanntmachung des Hinweises auf die Patenterteilung: **18.06.2003**
(21) Anmeldenummer: 99126195.9
(22) Anmeldetag: 30.12.1999
(51) Int. Cl.: A01K 5/00

(54) **Vorrichtung zum Mischen und Verteilen von Schüttgütern**
Apparatus for mixing and distributing bulk products
Dispositif destiné à effectuer le mélange et la distribution de produits en vrac

(30) Priorität: 08.01.1999 DE 29900199 U
(43) Veröffentlichungstag der Anmeldung: 12.07.2000
(73) Patentinhaber: Firma Bernard van Lengerich Maschinenfabrik GmbH & Co., 48488 Emsbüren (DE)
(72) Erfinder: van Lengerich, Wilhelm, 48488 Emsbüren (DE); Altgilbers Bernhard, 48488 Emsbüren (DE)
(74) Vertreter: Busse & Busse Patentanwälte

(56) Entgegenhaltungen:
- EP-A- 0 709 022
- EP-A- 0 793 911

## Beschreibung

Die Erfindung bezieht sich auf eine Vorrichtung zum Mischen und Verteilen von Schüttgütern, insbesondere von kurz- und langfaserigem Silagegut in einer Ausbildung nach dem Oberbegriff des Patentanspruches 1.

Vorrichtungen der vorgenannten Art sind als sogenannte Futter-Mischverteilwagen bekannt und zum Beispiel mit einem Fahrgestell mit zwei Laufrädern und einer Deichsel zum Anhängen an einen landwirtschaftlichen Schlepper ausgestattet. Solche Futter-Mischverteilwagen können darüberhinaus auch noch mit einem zum Beispiel um eine horizontale Achse schwenkbaren Schneidrahmen oder dergleichen Abtrageorgan ausgerüstet sein, um aus Flach- oder Fahrsilos Silageblöcke auszuschneiden und sie über eine schwenkbare Ladefläche in den Aufnahme- und Mischraum des Behälters einzubringen. Zum Austragen des Fördergutes in üblicherweise - bezogen auf die Fahrtrichtung - am Ende des Behälters einer Austragöffnung und eine quer zur Fahrtrichtung ausgerichtetes Förderband angeordnet, um das gemischte Futter in einem Futtergang kontrolliert ausbringen zu können.

Nachteilig bei diesen bekannten Vorrichtungen ist, daß der Bauaufwand zum Austragen des Futtergutes erheblich ist. So ist das Förderband mit einer Antriebsvorrichtung zu versehen, die zudem so auszugestalten ist, daß wahlweise links oder rechts das Futter ausgetragen werden kann, so daß die Antriebsbewegung des Förderbandes umzukehren ist. Desweiteren ist die Austragöffnung zentral im hinteren Bereich der Behälterwandung vorzusehen, um sowohl für Links- als auch für die Rechtsaustragöffnung gleichmäßig das Futter dem Förderband zuführen zu können. Nachteilig dabei ist auch insbesondere am Ende eines Futterganges aufgrund der hinteren Anordnung des Förderbandes Futter nur in einem begrenzten Maße zugeführt werden kann.

Es ist Aufgabe der vorliegenden Erfindung, eine Vorrichtung der eingangs genannten Art zu schaffen, mit der das Fördergut mit einem verminderten Bauaufwand und darüber hinaus auch verbessert ausgetragen werden kann.

Zur Lösung dieser Aufgabe zeichnet sich die Vorrichtung der eingangs genannten Art durch die im Patentanspruch 1 angegebenen Merkmale aus. Vorteilhafte Ausgestaltungen der Erfindung sind in den Unteransprüchen angegeben.

Durch die seitlich vorgesehene Austragöffnung mit der zugeordneten um eine horizontale Achse verschwenkbare Verschlußklappe mit den zugeordneten Faltenbälgen kann das auszutragene Futter gezielt und durch die Faltenbälge geleitet an der gewünschten Stelle ausgebracht werden, ohne daß es eines besonderen Förderbandes bedarf. Dabei machen die Faltenbälge jede Öffnungs- beziehungsweise Verschlußstellung der Verschlußklappe automatisch mit, ohne daß es angetriebener Teile bedarf. Die Faltenbälge sichern darüber hinaus, daß seitlich nicht die zu öffnende Klappe und mithin in den Aufnahmeraum des Behälters hineingegriffen werden kann, so daß die Faltenbälge ebenfalls zur Betriebssicherheit der Vorrichtung beitragen. Vorzugsweise erstrecken sich die Faltenbälge jeweils an den seitlichen Stirnkanten der Verschlußklappe bishin zu den entsprechenden Befestigungsstellen an der Behälterwandung. Die Faltenbälge können aus einem elastischen Material, beispielsweise Gummi, bestehen. Besonders vorteilhaft ist, wenn die Austragöffnung, bevorzugtermaßen auf beiden Seiten der Behälterseitenwände, asymmetrisch in der Behälterwandung, bezogen auf die Rotationsachse des Fördermischelementes vorgesehen sind, so daß behinderungsfrei der auszutragene Gutstrom von dem Misch- und Förderelement an die Austragöffnung und die Faltenbälge übergeben werden kann. Eine Verstopfung der Maschine beziehungsweise ein infolge von Behinderung beeinträchtigter Gutauswurf ist mithin mit geringstem Bauaufwand vermieden. Weitere Ausgestaltungen der Erfindung sowie Vorteile ergeben sich aus der nachfolgenden Beschreibung und der Zeichnung

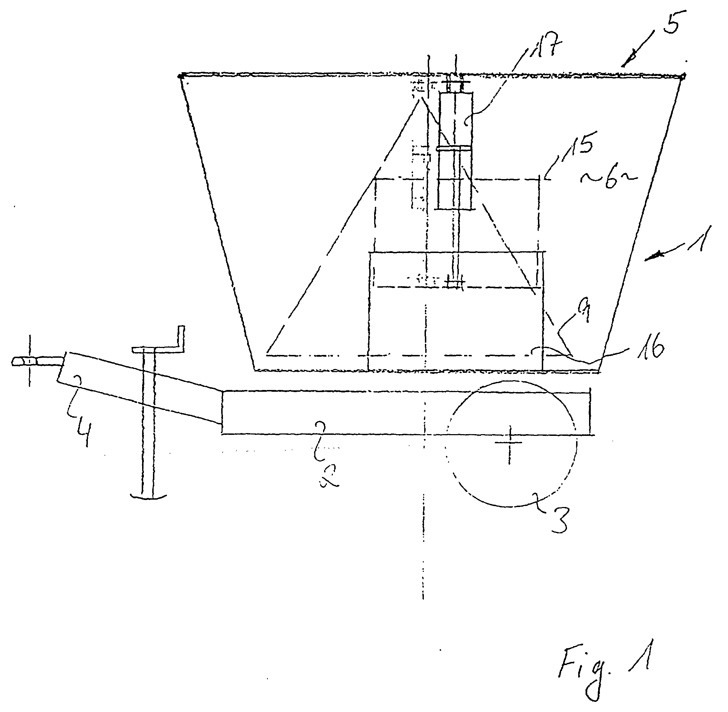

In der Zeichnung zeigen:
- Fig: 1: in einer schematischen Seitendarstellung ein Ausführbeispiel der Vorrichtung nach der Erfindung,
- Fig: 2: in einer schematischen Draufsicht das Ausführungsbeispiel nach Fig. 1.

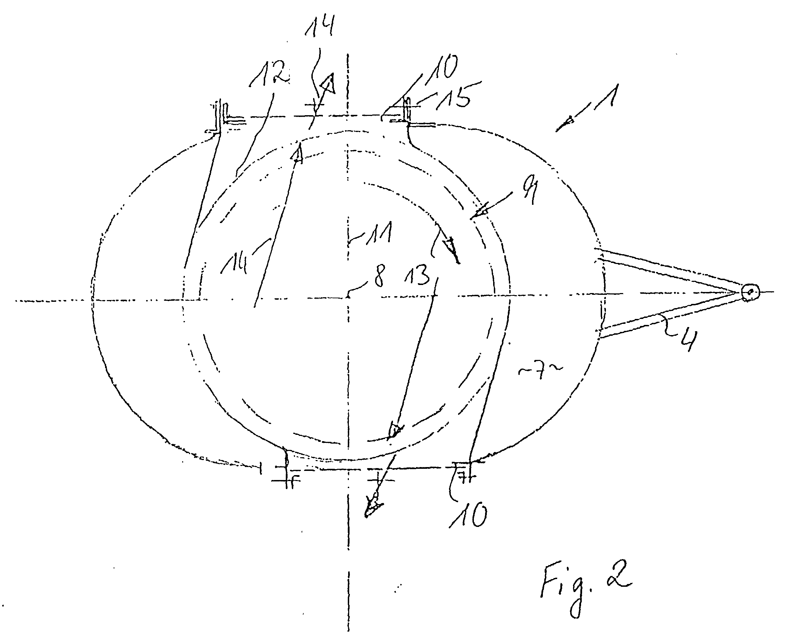

Die in der Zeichnung allgemein mit 1 bezifferte Vorrichtung zum Mischen und Verteilen von Schüttgütern ist in dem dargestellten Ausführungsbeispiel als Futtermischverteilwagen ausgebildet mit einem Fahrgestell 2 mit Laufrädern 3 sowie einer Deichsel 4 zum Anhängen an einen nicht dargestellten Schlepper. Auf dem Fahrgestell 2 ist ein Behälter 5 mit einer Wandung 6 abgestützt; in dessen Inneren sich ein Aufnahmeraum 7 (Fig. 2) befindet. Der Behälter 5 ist an seiner Vorder- und Rückseite abgerundet ausgebildet und verjüngt sich von oben nach unten, so daß er eine leicht trichterförmige rechteckige in Vorder- und Endbereichen abgerundete Gestaltung hat. Zentral innerhalb des Aufnahmeraumes mit senkrecht ausgerichteter Rotationsachse 8 (Fig. 2) ist ein allgemein mit 9 und nicht im einzelnen dargestelltes Förder- und Mischelement angeordnet, das sich nach unten hin erweitert (Fig. 1), so daß es bodenseitig im wesentlichen den Aufnahmeraum bestreicht. In den Behälterseitenwänden sind in der Behälterseitenwandung Austragöffnungen 10 vorgesehen, und zwar derart, daß sie asymmetrisch bezogen auf die senkrechte Lage der Rotationsachse 8 angeordnet sind. Asymmetrisch in diesem Sinne bedeutet, daß, wie dies aus Fig. 2 sehr anschaulich hervorgeht, sich die jeweilige Austragöffnung einenends mit einem geringeren Abstandsmaß von der Breite her zur Verlängerungslinie, die die Rotationsachse 8 schneidet(Bezugsziffer 11 in Fig. 2), erstreckt als die andere Seite der Austragöffnung 10 bezogen auf deren Breite und deren Lage zur Linie 11, so daß sich diese von ihrer Verlängerung zum Gutstrom 12 (Fig. 2) in etwa tangential erstreckt. Dadurch kann der Gutstrom bezogen auf die Förderrichtung 13 (Fig. 2) behinderungsfrei in Richtung der pfeile 14 in Fig. 2 ausgebracht werden.

In Austragöffungen 10 sind jeweils um eine Achse 15 schwenkbare Klappen 16 zugeordnet, die auch über Hydrau1ik- oder Pneumatikzylinder 17 (Fig. 1) betätigt werden können. Nicht im einzelnen dargestellt können diese Klappen 16 mit den Behälterseitenwänden jeweils seitlich über Faltenbälge verbunden sein, so daß ein seitliches Hineingreifen verhindert ist. Desweiteren wird der Gutstrom über diese Faltenbälge als Leitorgane sicher in den gewünschten Bereich geleitet. Die Faltenbälge erstrecken sich jeweils zu beiden Seiten der Längsstirnkanten der Verschlußklappe und bestehen vorzugsweise aus einem elastischen Material wie beispielsweise Gummi. Sie sind fächerartig zusammenzufalten und machen daher jede Schwenkstellung der Verschlußklappe mit. Sie sichern auch gegen ein unbeabsichtigtes Greifen in den Aufnahmeraum des Behälters, so daß Sie auch zur Betriebssicherheit der Vorrichtung beitragen.

## Patentansprüche

1. Vorrichtung zum Mischen und Verteilen von Schüttgütern insbesondere von kurz- und langfaserigem Silagegut, mit einem Behälter zur Aufnahme von Fördergut, der ein vorzugsweise um eine senkrecht ausgerichtete Rotationsachse in Rotationsbewegung versetzbares Förder- und Mischelement sowie in der Behälterwandung zumindest eine Austragöffnung aufweist, **dadurch gekennzeichnet, daß** der Austragöffnung eine um eine horizontale Achse schwenkbare Verschlußklappe zugeordnet ist und diese über Faltenbälge mit der Behälterwandung verbindbar ist.

2. Vorrichtung nach Anspruch 1, **dadurch gekennzeichnet, daß** sich die Faltenbälge jeweils an beiden Längsstirnkanten der Verschlußklappe erstrecken.

3. Vorrichtung nach Anspruch 1 oder 2 **dadurch gekennzeichnet, daß** die Faltenbälge aus einem elastischen Material bestehen.

4. Vorrichtung nach Anspruch 1 oder 2, **dadurch gekennzeichnet, daß** zumindest eine Austragöffnung eine sich asymmetrisch zur Rotationsachse des Förder- und Mischelementes ausweisende Austragbreite in der Behälterwandung hat und bezüglich ihrer Lage zur Rotationsachse einenends eine längere Öffnungsbreite hat als anderenends.

5. Vorrichtung nach Anspruch 4, **dadurch gekennzeichnet, daß** sich einenends die Verlängerung der Austragsöffnung tangential an dem bodenseitigen Förderkreis des Fördergutes des Förder- und Mischelementes anschließt.

6. Vorrichtung nach Anspruch 4 oder 5, **dadurch gekennzeichnet, daß** in gegenüberliegenden Behälterwandungen zwei spiegelbildlich versetzt asymmetrisch angeordnete Aufnahmeaustragsöffnungen vorgesehen sind.

## Claims

1. Apparatus for mixing and distributing bulk products, particular short- and long-fibre silage material, with a container for receiving material to be conveyed, which container exhibits a conveying and mixing element that can preferably be displaced about a vertically aligned axis of rotation in a rotary movement, and at least one discharge opening in the container wall, **characterised in that** a sealing valve, that can be swivelled about a horizontal axis is assigned to the discharge opening and can be connected by concertina bellows to the container wall.

2. Apparatus according to claim 1, **characterised in that** the concertina bellows each extend along both longitudinal front edges of the sealing valve.

3. Apparatus according to claim 1 or 2, **characterised in that** the concertina bellows consist of an elastic material.

4. Apparatus according to claim 1 or 2, **characterised in that** at least one discharge opening has a discharge width in the container wall that points asymmetrically in the dsredion of rotation of the conveying and mixing element, and in terms of its position in relation to the axis of rotation has a longer opening width at one end than at the other.

5. Apparatus according to claim 4, **characterised in that** the extension of the discharge opening at one end is connected tangentially to the conveyor circuit of the conveyed products in the conveying and mixing element on the bottom.

6. Apparatus according to claim 4 or 5, **characterised in that** two receiving discharge openings, arranged asymmetrically so that they are displaced in mirror image fashion, are provided in opposing walls of the container.

## Revendications

1. Dispositif destiné au mélange et à la distribution de produits en vrac en particulier de produit d'ensilage à fibres courtes et longues, comportant un réservoir pour recevoir le produit transporté, qui présente un élément de mélange et de transport pouvant être entraîné en rotation de préférence autour d'un axe de rotation orienté verticalement ainsi qu'au moins un orifice de décharge dans la paroi du réservoir, **caractérisé en ce qu'**un clapet de fermeture pouvant pivoter autour d'un axe horizontal est associé à l'orifice de décharge et peut être raccordé par l'intermédiaire de soufflets à la paroi du réservoir.

2. Dispositif selon la revendication 1, **caractérisé en ce que** les soufflets s'étendent chacun sur les deux bords frontaux longitudinaux du clapet de fermeture.

3. Dispositif selon la revendication 1 ou 2 **caractérisé en ce que** les soufflets sont constitués d'une matière élastique.

4. Dispositif selon la revendication 1 ou 2, **caractérisé en ce qu'**au moins un orifice de décharge présente dans la paroi du réservoir une largeur de décharge s'avérant asymétrique par rapport à l'axe de rotation de l'élément de transport et de mélange et présente en ce qui concerne sa position par rapport à l'axe de rotation, à une extrémité une largeur d'orifice plus étendue qu'à l'autre extrémité.

5. Dispositif selon la revendication 4, **caractérisé en ce qu'**à une extrémité le prolongement de l'orifice de décharge est contigu tangentiellement au cercle de transport côté fond du produit transporté de l'élément de transport et de mélange.

6. Dispositif selon la revendication 4 ou 5, **caractérisé en ce que** dans des parois de réservoir opposées sont prévus deux orifices de décharge et de réception disposés asymétriquement et décalés spéculairement.
